# EUROPEAN PATENT SPECIFICATION

(11) **EP 4 235 928 B1**
(45) Date of publication and mention of the grant of the patent: **16.10.2024**
(21) Application number: 21927066.7
(22) Date of filing: 29.12.2021
(51) Int. Cl.: H01M 50/242, H01M 10/04

(54) **BATTERY, MANUFACTURING METHOD THEREFOR, MANUFACTURING DEVICE THEREOF, AND ELECTRICAL APPARATUS**
BATTERIE, HERSTELLUNGSVERFAHREN DAFÜR, HERSTELLUNGSVORRICHTUNG DAFÜR UND ELEKTRISCHE VORRICHTUNG
BATTERIE, SON PROCÉDÉ DE FABRICATION, SON DISPOSITIF DE FABRICATION ET APPAREIL ÉLECTRIQUE

(43) Date of publication of application: 30.08.2023
(73) Proprietor: Contemporary Amperex Technology (Hong Kong) Limited, Central, Central And Western District (HK)
(72) Inventor: TANG, Yu, Ningde, Fujian 352100 (CN); WANG, Hong, Ningde, Fujian 352100 (CN); WANG, Peng, Ningde, Fujian 352100 (CN); LIU, Jiang, Ningde, Fujian 352100 (CN); LI, Junrong, Ningde, Fujian 352100 (CN)
(74) Representative: Ziebig Hengelhaupt Intellectual Property Attorneys Patentanwaltskanzlei PartGmbB
(86) International application number: PCT/CN2021/142444
(87) International publication number: WO 2023/123039

(56) References cited:
- EP-A1- 3 780 147
- EP-A1- 4 044 345
- CN-U- 205 723 711
- CN-U- 205 900 653
- CN-U- 207 250 612
- CN-U- 207 602 661
- CN-U- 207 602 661
- CN-U- 208 923 254
- CN-U- 209 312 858
- CN-U- 210 110 861
- CN-U- 211 879 464
- CN-U- 211 879 464
- CN-U- 213 184 494
- CN-U- 215 299 387
- JP-A- 2014 157 747
- US-A1- 2014 120 400

## Description

### Technical Field

The present application relates to the field of battery technologies, and particularly to a battery, a manufacturing method and apparatus thereof, and an electric device.

### Background Art

In recent years, with an advance in science and technology, particularly a development of an electric vehicle technology, requirements for a battery performance are increasing. Usually, a battery includes a box and a battery unit in which a plurality of battery cells are stacked, and the battery unit is provided in the box. In a process of using the battery, the battery cell (battery unit) inevitably expands and deforms, such that the battery unit has an increased overall volume to press and deform the box of the battery unit, thus influencing assembly and a service life of the battery. In order to prevent the influence of the expansion of the battery unit on the box, an end plate is generally provided between an inner wall of the box and the battery unit; that is, the battery unit is fixed to the box by the end plate, so as to reduce the influence of the expansion of the battery unit on the box. CN 207 602 661 U discloses an end plate for a battery comprising a first end plate and a second end plate and forming a buffer groove having a clearance to absorb the pressure generated by the expansion of a cell.

### Summary

The present application aims to provide a battery, a manufacturing method and apparatus thereof, and an electric device, which may balance stress distribution of an end plate and a box according to expansion distribution of a battery unit and provide an expansion space, such that the box is not easy to deform, thus facilitating assembly of the box and the battery unit and a service life of the battery.

In a first aspect, an embodiment of the present application provides a battery, including: a box; a battery unit provided in the box, the battery unit including a plurality of battery cells stacked in a first direction, the battery cell including two first walls provided oppositely in the first direction and two second walls provided in a second direction, an electrode terminal being provided on the second wall, and the first direction being orthogonal to the second direction; and an end plate provided between a box inner wall of the box and the battery unit, the end plate having a first surface facing the box inner wall and a second surface facing the first wall, the first surface having a first region corresponding to a central region of the first wall and a second region corresponding to an edge region of the first wall, and the second surface attached to the battery unit being a flat surface; wherein spacing exists between the first region and the box inner wall, a buffering portion is provided in the spacing, the buffering portion is configured to be capable of abutting against the box inner wall to be deformed when the battery unit expands, and the second region abuts against the box inner wall.

In the above-mentioned technical solution, since the buffering portion capable of being deformed under pressure is provided in the spacing between the first region of the end plate and the box inner wall of the box, the expansion space may be provided for the expansion of the battery unit in the first direction for buffering by deformation of the buffering portion, such that the end plate may be protected from deformation or even failure caused by excessive pressing, and then, the box inner wall may be protected from damage caused by excessive pressing, thus facilitating normal assembly and use of the battery, and guaranteeing the service life of the battery.

In addition, the first surface of the end plate is provided with the first region corresponding to the central region of the first wall of the battery cell and the second region corresponding to the edge region of the first wall of the battery cell, and the first region of the end plate has a smaller thickness than the second region; that is, the spacing is provided between the first region of the end plate and the box inner wall of the box, and the buffering portion is provided in the spacing, such that a part of the end plate provided with a buffer may correspond to a central part of the battery unit with a large expansion amount, and therefore, expansion pressing received by the end plate may be balanced, unbalanced stress of the end plate caused by uneven expansion of the battery unit may be avoided, expansion pressing received by the whole end plate may be kept balanced, buffering may be performed according to actual expansion distribution of the battery unit, the condition that local stress received by the end plate is overlarge may be reduced, the end plate may be better protected from deformation or even failure caused by excessive pressing, and then, the box inner wall may be protected from damage caused by excessive pressing, thus facilitating the normal assembly and use of the battery, and guaranteeing the service life of the battery.

In addition, when the battery unit expands, since the second region of the first surface of the end plate directly abuts against the box inner wall of the box, instead of being provided with a buffering portion as the first region, expansion of an end portion of the battery unit may be restricted to guarantee reliability of electrical connection between the adjacent battery cells. In particular, the electrode terminals are provided on the two second walls of the battery cell provided oppositely in the second direction; that is, the electrode terminals are provided at both ends of the battery cell in the second direction, and the battery cells are usually electrically connected by a bus bar, such that the end portion of the battery unit may be restrained by providing, on the end plate, the second region directly abutting against the box inner wall of the box, so as to suppress a change in a distance between the end portions of the adjacent battery cells, thereby reliably guaranteeing the electrical connection of the battery cells.

In some embodiments, the edge region accounts for 10% to 50% of the first wall.

In the above-mentioned technical solution, the first region and the second region of the first surface of the end plate are provided according to the above-mentioned proportion in the edge region of the battery cell, such that the uneven expansion of the battery unit may be better handled, thereby better performing buffering according to the actual expansion distribution of the battery unit, and reducing the overlarge local stress.

According to a not claimed example, on the first wall, a range of 0% to 25% from an edge of the second wall in the second direction is the edge region.

In the above-mentioned technical solution, the edge region is provided according to the above-mentioned proportion, such that the uneven expansion of the battery unit may be better handled, thereby better performing buffering according to the actual expansion distribution of the battery unit, and reducing the overlarge local stress.

In some embodiments, at least a part of the buffering portion extends in the second direction

In the above-mentioned technical solution, the stress of the end plate may not be too concentrated, an expansion force of the battery unit may be dispersed, the stress of the end plate may be alleviated, and the buffering may be better provided for the expansion of the battery unit. That is, by extending at least a part of the buffering portion in the second direction, the end plate may be facilitated to disperse the expansion force caused by the expansion of the battery unit in the second direction.

According to the invention as claimed herein, at least a part of the buffering portion extends obliquely upward towards the box inner wall.

In the above-mentioned technical solution, when the battery unit expands to press the end plate, since the buffering portion extends obliquely upward towards the box inner wall to have an inclination angle, the buffering portion may be more easily deformed when the battery unit expands to press and touch the box inner wall, so as to provide the expansion space for the expansion of the battery unit in time to better facilitate buffering, and better disperse the expansion force caused by the expansion of the battery unit. In addition, the buffering portion may be inclined upward at any angle as long as the buffering portion may be deformed for buffering when the battery unit expands, and the angle at which the buffering portion is inclined upward is not particularly limited.

In some embodiments, the number of the buffering portions is plural, and the plural buffering portions are provided at intervals in a height direction of the end plate.

In the above-mentioned technical solution, the spaced arrangement of the plural buffering portions in the height direction of the end plate may better facilitate even dispersion of the expansion force of the battery unit, and improve stress uniformity of a contact surface of the end plate to make the stress even, thereby better protecting the battery.

In some embodiments, the plural buffering portions are arranged in a matrix.

In the above-mentioned technical solution, the expansion force of the battery unit may be further evenly dispersed, and the stress uniformity of the contact surface of the end plate may be improved to make the stress even, thereby better protecting the battery.

The first region is formed by providing a recess in the end plate.

In the above-mentioned technical solution, a structure of the end plate is not required to be modified greatly, and the first region may be formed only by providing the end plate with the recess; that is, the end plate may have the first region and the second region thicker than the first region only by a simple process (for example, cutting, molding, or the like), thereby simplifying processing.

The buffering portion and the end plate are of an integral structure.

In the above-mentioned technical solution, a buffering structure with the first region and the second region thicker than the first region may be implemented only by a simple process (molding, or the like), thereby simplifying processing. In addition, the present application is not limited thereto, and the buffering portion and the end plate may be provided in a split structure as required.

In some embodiments, the box inner wall has a first clamping portion protruding towards the end plate, the end plate has a second clamping portion, and the first clamping portion is configured to be snapped with the second clamping portion.

In the above-mentioned technical solution, the end plate and the box may be positioned more precisely and more quickly to facilitate assembly of the end plate.

In some embodiments, the battery cell includes an electrode assembly, the electrode assembly includes a first electrode sheet, a second electrode sheet and a separator, the first electrode sheet and the second electrode sheet have opposite polarity, and the separator is configured to separate the first electrode sheet from the second electrode sheet; the first electrode sheet and the second electrode sheet are wound around a winding axis to form a winding structure, and the winding axis is perpendicular to the first direction; or the electrode assembly includes a plurality of first electrode sheets, a plurality of second electrode sheets and a separator, the plurality of first electrode sheets and the plurality of second electrode sheets are alternately stacked in the first direction; or the electrode assembly includes a first electrode sheet, a plurality of second electrode sheets and a separator, the first electrode sheet is continuously bent and includes a plurality of stacked sections and a plurality of bent sections, the plurality of stacked sections and the plurality of second electrode sheets are alternately stacked in the first direction, and each bent section is configured to connect two adjacent stacked sections

In the above-mentioned technical solution, the battery cell mainly expands in the first direction, and the buffering portion is provided in the first direction and located between the battery unit and the box inner wall, thus better facilitating the buffering portion of the end plate to absorb the expansion of the battery unit.

In some embodiments, the first wall is a wall of the battery cell with a largest area.

In the above-mentioned technical solution, the even dispersion of the expansion force of the battery unit may be better facilitated, and the stress uniformity of the contact surface of the end plate may be improved to make the stress even, thereby better protecting the battery.

In a second aspect, an embodiment of the present application provides an electric device, which includes the battery according to the first aspect of the embodiment of the present application.

In a third aspect, an embodiment of the present application provides a manufacturing method of a battery, including: providing a box; providing a battery unit, the battery unit including a plurality of battery cells stacked in a first direction, the battery cell including two first walls provided oppositely in the first direction and two second walls provided oppositely in a second direction, an electrode terminal being provided on the second wall, and the first direction being orthogonal to the second direction; providing an end plate, the end plate having a first surface configured to face the box inner wall and a second surface configured to face the first wall, the first surface having a first region corresponding to a central region of the first wall and a second region corresponding to an edge region of the first wall, and the second surface being a flat surface; and mounting the battery unit and the end plate in the box, such that the end plate is located between the box inner wall and the battery unit, the second region abuts against the box inner wall, and spacing exists between the first region and the box inner wall, a buffering portion being arranged in the spacing, and the buffering portion being capable of abutting against the box inner wall to be deformed when the battery unit expands.

In a fourth aspect, an embodiment of the present application provides a manufacturing apparatus of a battery, including: a first providing device configured to provide a box; a second providing device configured to provide a battery unit, the battery unit including a plurality of battery cells stacked in a first direction, the battery cell including two first walls provided oppositely in the first direction and two second walls provided oppositely in a second direction, an electrode terminal being provided on the second wall, and the first direction being orthogonal to the second direction; a third providing device configured to provide an end plate, the end plate having a first surface configured to face the box inner wall and a second surface configured to face the first wall, the first surface having a first region corresponding to a central region of the first wall and a second region corresponding to an edge region of the first wall, and the second surface being a flat surface; and an assembling device configured to mount the battery unit and the end plate in the box, such that the end plate is located between the box inner wall and the battery unit, the second region abuts against the box inner wall, and spacing exists between the first region and the box inner wall, a buffering portion being arranged in the spacing, and the buffering portion being capable of abutting against the box inner wall to be deformed when the battery unit expands.

### Brief Description of Drawings

Various other advantages and merits will become apparent to those skilled in the art by reading through the following detailed description of preferred embodiments. Figures are only intended to illustrate preferred embodiments and not construed as limiting the present application. In all figures, like reference numerals denote like parts. In the drawings:
FIG. 1 is a schematic diagram of a vehicle according to an embodiment of the present application;
FIG. 2 is an enlarged perspective view of an assembly structure of a battery according to an embodiment of the present application, in which a state where an upper box of a box is disassembled is shown;
FIG. 3 is a perspective view of a battery module and an end plate in an embodiment of the present application, in which a box side wall near an end plate side is not shown, and a battery cell is covered with a frame of the battery module;
FIG. 4 is a perspective view of an end plate of a battery in an embodiment of the present application;
FIG. 5 is a perspective view of a battery cell in an embodiment of the present application;
FIG. 6 is a perspective view further showing regions of the battery cell on the basis of FIG. 5;
FIG. 7 is a schematic sectional diagram taken along line A-A of FIG. 2, the line A-A passing through a first region of an end plate;
FIG. 8 is a schematic sectional diagram taken along line B-B of FIG. 2, the line B-B passing through a second region of the end plate;
FIG. 9 is a sectional view of a structure of an electrode assembly of a battery cell in the present application, in which each of (a), (b) and (c) of FIG. 9 is one embodiment of the structure of the electrode assembly; and
FIG. 10 is a schematic flow chart of a manufacturing method of a battery according to an embodiment of the present application.

### Detailed Description of Embodiments

The embodiments of the technical solutions of the present application will be described in detail below with reference to the accompanying drawings. The following embodiments are only used to illustrate the technical solutions of the present application more clearly, and are therefore only used as examples, and cannot be used to limit the protection scope of the present invention as defined by the claims.

Unless defined otherwise, all technical and scientific terms used herein have the same meanings as are commonly understood by those skilled in the art; the terms used herein are merely for the purpose of describing particular embodiments, and are not intended to limit the present application; the terms "including" and "having" and their any variations in the specification, claims and aforesaid figures of the present application are intended to cover nonexclusive inclusion.

In the description of the embodiments of the present application, the technical terms such as "first", "second", or the like, are only used for distinguishing different objects, and are not intended to indicate or imply relative importance or significance or to imply the number, specific sequence or primary and secondary relationship of indicated technical features. In the description of the embodiments of the present application, "a plurality of" means more than two unless otherwise specified.

The term "embodiment" mentioned herein is intended to mean that specific features, structures, or characteristics described in conjunction with the embodiments may be included in at least one embodiment of the present application. This term "embodiment" appearing at various places throughout the specification does not necessarily refer to the same embodiments, or independent or alternative embodiments that are mutually conflicting with other embodiments. Persons skilled in the art can explicitly and implicitly understand that the embodiments described herein may be combined with other embodiments.

In the description of the embodiments of the present application, the term "and/or" herein only describes an association relationship between associated objects, and indicates that three relationships may exist. For example, A and/or B may indicate three cases: only A exists; both A and B exist; and only B exists. In addition, in this specification, the symbol "/" generally indicates that associated objects have a relationship of "or".

In the description of the embodiments of the present application, the term "a plurality of" means more than two (including two); similarly, "a plurality of groups" means more than two groups (including two groups), and "a plurality of sheets" means more than two sheets (including two sheets).

In the description of the embodiments of the present application, directions or positional relationships indicated by the technical terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" etc. are based on orientations or positional relationships shown in the accompanying drawings, and they are used only for describing the embodiments of the present application and for description simplicity, but do not indicate or imply that an indicated device or element must have a specific orientation or be constructed and operated in a specific orientation. Therefore, it cannot be understood as a limitation on the embodiments of the present application.

In the description of the embodiments of the present application, unless specified or limited otherwise, the technical terms "mounted", "connected", "coupled", and "fixed" and the like are used broadly, and may be, for example, fixed connections, detachable connections, or integral connections; may also be mechanical or electrical connections; may also be direct connections or indirect connections via intervening structures; may also be communication or an interaction relationship of two elements. Specific meanings of the above terms in the embodiments of the present application can be understood by those skilled in the art according to specific situations.

A battery according to an embodiment of the present application refers to a single physical module including a plurality of battery cells to provide a higher voltage and capacity. The battery may include a plurality of battery modules electrically connected with each other and a box, and the plurality of battery modules are arranged in a space of the box. Generally, the box is a sealed box.

The battery module may include a plurality of battery cells and a frame which surrounds the plurality of battery cells to fix the battery cells into a whole. Generally, the frame serves to fix the plurality of battery cells without achieving a sealing function.

The battery cell includes an electrode assembly and electrolyte, and the electrode assembly includes a positive plate, a negative plate and a spacing film. The battery cell works mainly dependent on movement of metal ions between the positive plate and the negative plate. The positive plate includes a positive current collector and a positive active substance layer, a surface of the positive current collector is coated with the positive active substance layer, a current collector which is not coated with the positive active substance layer is higher than the current collector which is coated with the positive active substance layer, and the current collector which is not coated with the positive active substance layer is used as a positive tab. Taking a lithium ion battery as an example, the positive current collector may be made of aluminum, and positive active substances may be lithium cobalt oxide, lithium iron phosphate, ternary lithium, lithium manganate, or the like. The negative plate includes a negative current collector and a negative active substance layer, a surface of the negative current collector is coated with the negative active substance layer, a current collector which is not coated with the negative active substance layer is higher than the current collector which is coated with the negative active substance layer, and the current collector which is not coated with the negative active substance layer is used as a negative tab. The negative current collector may be made of copper, and negative active substances may be carbon, silicon, or the like. In order to guarantee passage of a large current without fusing, a plurality of positive tabs are stacked together, and a plurality of negative tabs are stacked together. A separator may be made of PP, PE, or the like. Furthermore, the electrode assembly may have a winding structure or a lamination structure, and the embodiment of the present application is not limited thereto.

A development of a battery technology requires simultaneous consideration of various design factors, such as an energy density, a cycle life, discharge capacity, a charge/discharge rate, and other performance parameters, as well as battery safety.

Currently, the battery of an electric vehicle is often required to be formed by dozens or even thousands of battery cells.

In an electric device, such as an electric vehicle, in a process of using the battery, the battery cell (battery unit) inevitably expands and deforms, such that the battery unit has an increased overall volume to press and deform the box of the battery unit, thus influencing assembly and a service life of the battery. In this regard, an end plate is usually provided between an inner wall of the box and the battery unit to reduce the influence of the expansion of the battery unit on the box.

However, in order to restrain the battery unit to suppress expansion deformation thereof, the end plate is generally required to have high structural strength. When the battery cell (battery unit) expands and deforms, the expansion is different at different positions, stress on the end plate is also uneven, the stress near a center is large, and the stress near a periphery is small; however, an influence caused by uneven distribution of the expansion of the battery unit is not considered in the end plate in a prior art, and the ability to suppress the expansion and deformation of the battery unit is limited; even if the end plate is provided, there still exists a situation where the end plate is excessively deformed to fail due to the expansion of the battery unit, which in turn causes the box to be pressed or even damaged. In addition, if the structural strength of the end plate is reinforced simply, excessive constraints on the battery unit may adversely affect the safety and life of the battery.

In view of this, the present application provides a technical solution in which a battery includes: a box; a battery unit provided in the box, the battery unit including a plurality of battery cells stacked in a first direction, the battery cell including two first walls provided oppositely in the first direction and two second walls provided in a second direction, an electrode terminal being provided on the second wall, and the first direction being orthogonal to the second direction; and an end plate provided between a box inner wall of the box and the battery unit, the end plate having a first surface facing the box inner wall and a second surface facing the first wall, the first surface having a first region corresponding to a central region of the first wall and a second region corresponding to an edge region of the first wall, and a part of the second surface attached to the battery unit being a flat surface; wherein spacing exists between the first region and the box inner wall, a buffering portion is provided in the spacing, the buffering portion may abut against the box inner wall to be deformed when the battery unit expands, and the second region abuts against the box inner wall.

Since the buffering portion capable of being deformed under pressure is provided in the spacing between the first region of the end plate and the box inner wall of the box, the expansion space may be provided for the expansion of the battery unit in the first direction for buffering by deformation of the buffering portion, such that the end plate may be protected from deformation or even failure caused by excessive pressing, and then, the box inner wall may be protected from damage caused by excessive pressing, thus facilitating normal assembly and use of the battery, and guaranteeing the service life of the battery. In addition, the first surface of the end plate is provided with the first region corresponding to the central region of the first wall of the battery cell and the second region corresponding to the edge region of the first wall of the battery cell, and the first region of the end plate has a smaller thickness than the second region; that is, the spacing is provided between the first region of the end plate and the box inner wall of the box, and the buffering portion is provided in the spacing, such that a part of the end plate provided with a buffer may correspond to a central part of the battery unit with a large expansion amount, and therefore, expansion pressing received by the end plate may be balanced, unbalanced stress of the end plate caused by uneven expansion of the battery unit may be avoided, expansion pressing received by the whole end plate may be kept balanced, buffering may be performed according to actual expansion distribution of the battery unit, the condition that local stress received by the end plate is overlarge may be reduced, the end plate may be better protected from deformation or even failure caused by excessive pressing, and then, the box inner wall may be protected from damage caused by excessive pressing, thus facilitating the normal assembly and use of the battery, and guaranteeing the service life of the battery. In addition, when the battery unit expands, since the second region of the first surface of the end plate directly abuts against the box inner wall of the box, instead of being provided with a buffering portion as the first region, expansion of an end portion of the battery unit may be restricted to guarantee reliability of electrical connection between the adjacent battery cells. In particular, the electrode terminals are provided on the two second walls of the battery cell provided oppositely in the second direction; that is, the electrode terminals are provided at both ends of the battery cell in the second direction, and the battery cells are usually electrically connected by a bus bar, such that the end portion of the battery unit may be restrained by providing, on the end plate, the second region directly abutting against the box inner wall of the box, so as to suppress a change in a distance between the end portions of the adjacent battery cells, thereby reliably guaranteeing the electrical connection of the battery cells.

An embodiment of the present application provides an electric device in which a battery is configured to provide electric energy.

The technical solutions described in the embodiments of the present application are applicable to various devices in which batteries are used, such as mobile phones, portable apparatuses, notebook computers, battery cars, electric toys, electric tools, electric vehicles, ships, spacecraft, or the like; for example, spacecraft include airplanes, rockets, space shuttles, spaceships, or the like.

It should be understood that the technical solutions described in the embodiments of the present application are not limited to application to the above-described apparatuses, but may be applied to all apparatuses in which batteries are used, and for simplicity of description, the following embodiments are all described with an electric vehicle as an example.

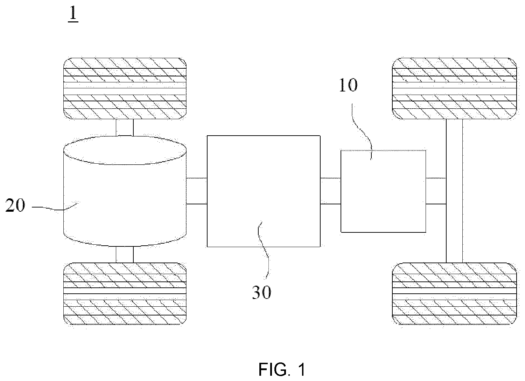

For example, as shown in FIG. 1 which is a schematic structural diagram of a vehicle 1 according to an embodiment of the present application, the vehicle 1 may be a fuel vehicle, a gas vehicle, or a new energy vehicle, and the new energy vehicle may be a battery electric vehicle, a hybrid electric vehicle, an extended range vehicle, or the like. The vehicle 1 may be provided therein with a motor 20, a controller 30, and a battery 10, and the controller 30 is configured to control the battery 10 to supply power to the motor 20. For example, the battery 10 may be provided at a bottom or front or rear of the vehicle 1. The battery 10 may be configured to supply power to the vehicle 1; for example, the battery 10 may be used as an operation power source of the vehicle 1 for a circuit system of the vehicle 1, for example, for work power demand in starting, navigation, and running of the vehicle 1. In another embodiment of the present application, the battery 10 may be used not only as the operation power source of the vehicle 1 but also as a driving power source of the vehicle 1, and replaces or partially replaces fuel oil or natural gas to provide driving power for the vehicle 1.

In order to meet different power demands, the battery 10 may include a plurality of battery units 200, the plurality of battery units 200 may be connected in series or in parallel or in series-parallel connection, and the series-parallel connection refers to a mixture of series connection and parallel connection.

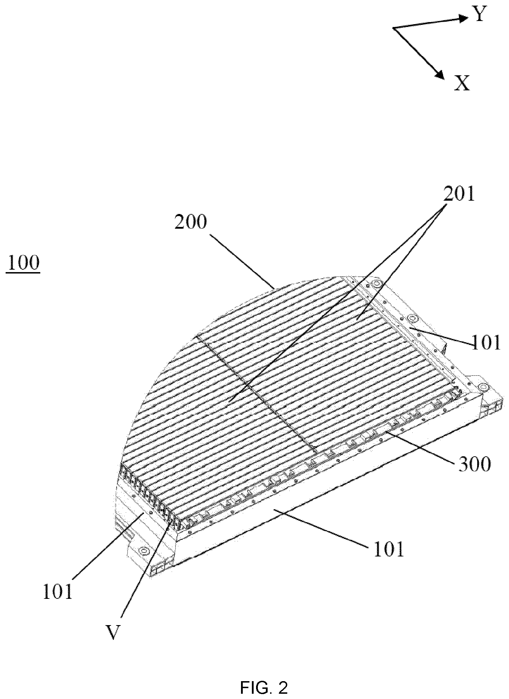

As shown in FIG. 2, the present application provides a battery, including: a box 100, a battery unit 200 provided in the box 100, and an end plate 300. The battery unit 200 includes a plurality of battery cells 201 stacked in a first direction X, the battery cell 201 includes two first walls 2011 provided oppositely in the first direction X and two second walls 2012 provided in a second direction Y orthogonal to the first direction X, and the second wall 2012 is provided with an electrode terminal V. The end plate 300 is provided between a box inner wall 101 of the box 100 and the battery unit 200. The end plate 300 has a first surface 301 facing the box inner wall 101 and a second surface 302 facing the first wall 2011. The first surface 301 has a first region 3011 corresponding to a central region of the first wall 2011 and a second region 3012 corresponding to an edge region of the first wall 2011. A part of the second surface 302 attached to the battery unit 200 is a flat surface. Spacing d exists between the first region 3011 and the box inner wall 101, a buffering portion 303 is provided in the spacing d, the buffering portion 303 may abut against the box inner wall 101 to be deformed when the battery unit 200 expands, and the second region 3012 abuts against the box inner wall 101.

For example, FIG. 2 shows an enlarged perspective view of an assembly structure of the battery according to an embodiment of the present application (a state where an upper box of the box is disassembled is shown). In the present application, the battery 10 may include a box 100, a battery unit 200 and an end plate 300, both the battery unit 200 and the end plate 300 are provided in the box 100, and the end plate 300 is provided between the battery unit 200 and a box inner wall of the box 100.

In some embodiments, the end plate 300 is a solid component and typically made of plastic or metal.

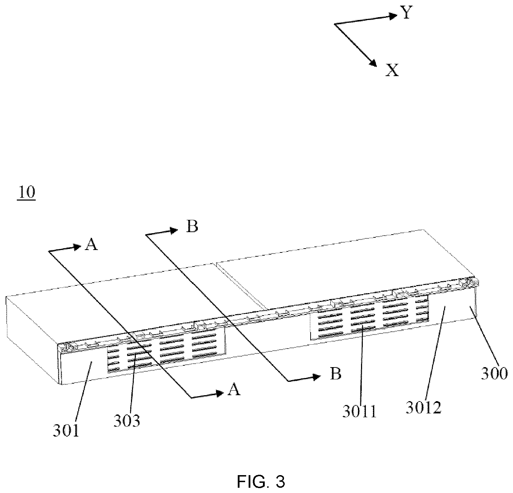

In some embodiments, the box 100 includes an upper box (not shown) and a lower box. The lower box includes four side walls 101 (only 3 side walls are shown in FIG. 2) and a bottom wall (not shown), the four side walls 101 are opposite in pairs and vertically provided on the bottom wall in a rectangular shape when viewed from above, so as to form the lower box with an upper end opening together with the bottom wall, and the upper end opening of the lower box is hermetically covered with the upper box to form the box 100 for accommodating the battery unit 200 and the end plate 300. That is, the four side walls 101 are formed as parts of the box inner walls of the box 100. In addition, as shown in FIG. 2, in a state in which the battery unit 200 and the end plate 300 are mounted in the box 100, the end plate 300 is located between one side wall 101 (the lower right side in FIG. 2) next thereto and the battery unit 200. For convenience of explanation, the side wall 101 next to the end plate 300 in FIG. 2 is sometimes referred to as "the end-plate-side wall 101". That is, in the state in which the battery unit 200 and the end plate 300 are mounted in the box 100, the end plate 300 is located between the battery unit 200 and the end-plate-side wall 101. In FIG. 3, the end-plate-side wall 101 is omitted to show a structure of the end plate 300, and in addition, in FIG. 2, the upper box is omitted to show the assembly structure in the box 100.

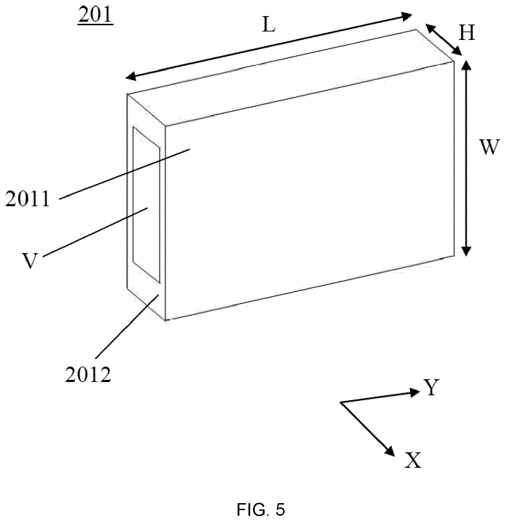

Referring to FIGS. 2 to 5, the battery unit 200 may include a plurality of battery cells 201 stacked in a first direction X, and the battery cell 201 includes two first walls 2011 provided oppositely in the first direction X and two second walls 2012 provided oppositely in a second direction Y. In some embodiments, an electrode terminal V may be provided on the second wall 2012. In some embodiments of the present application, as shown in FIG. 5 which is a perspective view of the battery cell in an embodiment of the present application, the battery cell 201 is substantially rectangular, and the first wall 2011 is a wall with a largest area in the battery cell 201. In addition, for convenience of explanation, here, the battery cell 201 has a length L, a width W and a thickness H; that is, the first direction X is also a thickness direction of the battery cell 201, the second direction Y is also a length direction of the battery cell 201, and the first direction X is orthogonal to the second direction Y. In addition, for convenience of explanation, the battery cell 201 next to the end plate 300 in FIG. 2 is also referred to as "the battery cell 201 adjacent to the end plate".

Referring to FIGS. 2 to 8, the end plate 300 is mounted between the battery unit 200 and the end-plate-side wall 101 (box inner wall), and the end plate 300 has a first surface 301 facing the end-plate-side wall 101 and a second surface 302 facing the first wall 2011 side of the battery cell 201. In addition, as shown in FIGS. 2 to 8, the first surface 301 of the end plate 300 has: in a state where the end plate 300 is mounted in the box 100, a first region 3011 corresponding to a central region of the first wall 2011 of the battery cell 201 and a second region 3012 corresponding to an edge region of the first wall 2011 of the battery cell 201.

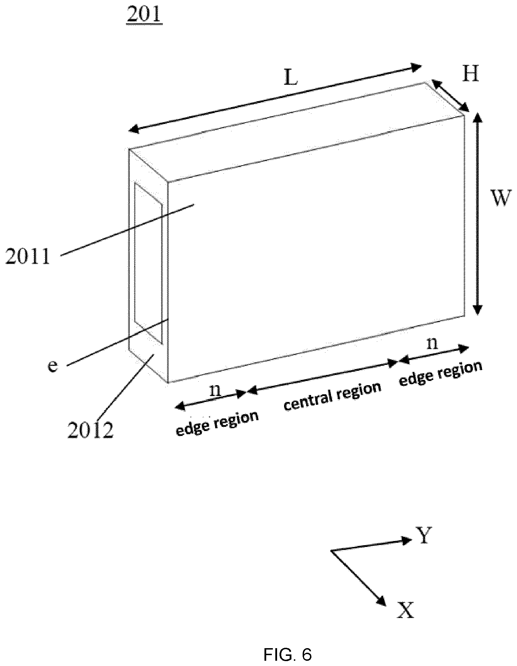

Referring to FIG. 6 which is a perspective view of the regions of the battery cell, here, the edge regions of the first wall 2011 of the battery cell 201 refer to regions on the first wall 2011 having a certain length n from edges e of both sides of the first wall 2011 in the length direction. In addition, as shown in FIG. 6, the central region of the first wall 2011 of the battery cell 201 refers to a region of the first wall 2011 except the edge regions.

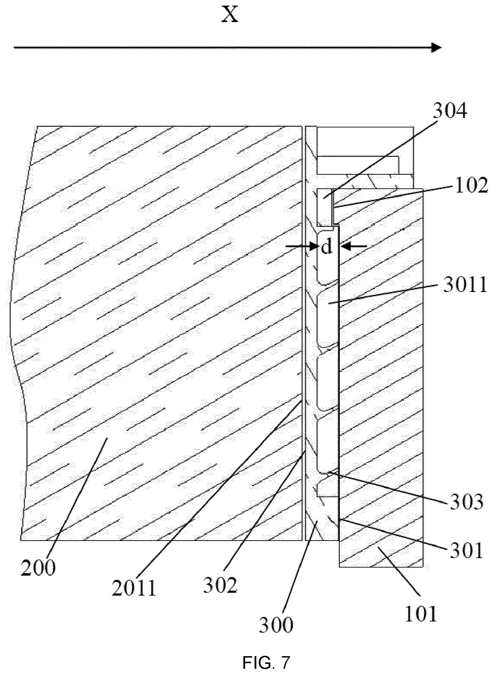

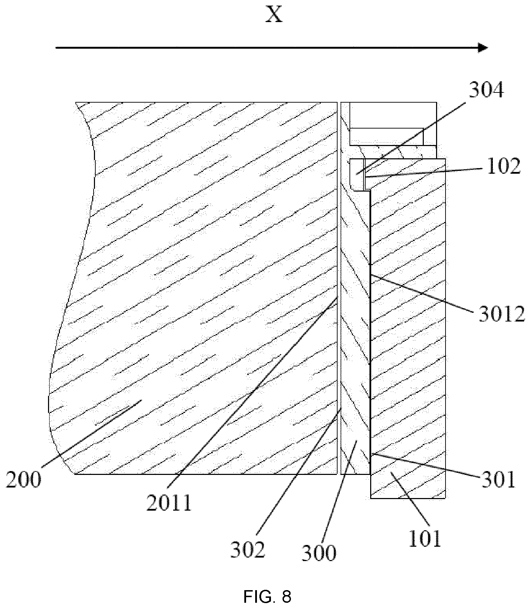

In addition, referring to FIGS. 2 to 8, a length of the first region 3011 in the first direction X is less than a length of the second region 3012 in the first direction X; that is, a thickness of the first region 3011 is less than a thickness of the second region 3012 of the end plate 300. Thus, as shown in FIGS. 7 and 8, in a state where the end plate 300 is mounted between the battery unit 200 and the end-plate-side wall 101 (box inner wall), certain spacing d exists between the first region 3011 of the end plate 300 and the end-plate-side wall 101 (box inner wall) of the box 100, and since an end plate part between the second region 3012 and the second surface 302 is actually an entity of the end plate 300 and the end plate 300 is usually made of plastic or metal, the second region 3012 of the end plate 300 abuts against the end-plate-side wall 101 (box inner wall) of the box 100, thus restraining displacement of an end portion of the battery cell.

Furthermore, as shown in FIGS. 7 and 8, the second surface 302 of the end plate 300 is a flat surface and attached to the first wall 2011 of the next battery cell 201. For convenience of understanding, the drawings show a slight gap between the second surface 302 of the end plate 300 and the first wall 2011 of the battery cell 201 attached thereto, but in reality, the second surface 302 and the first wall 2011 are closely attached, and the drawings show the gap only for convenience of understanding.

As shown in FIGS. 7 and 8, in some embodiments of the present application, a buffering portion 303 is provided between the first region 3011 of the end plate 300 and the end-plate-side wall 101 (box inner wall) of the box 100 (in the spacing d), and the buffering portion 303 is configured to be capable of abutting against the end-plate-side wall 101 (box inner wall) to be deformed when the battery unit 200 expands, thereby providing an expansion space for the expansion of the battery unit 200 for buffering.

In the above-mentioned technical solution of the present application, during use of the battery, since the plurality of battery cells 201 of the battery unit 200 are stacked in the first direction X, the battery unit 200 expands also in the first direction X. The expansion of the battery unit 200 presses the end plate 300 to damage the end plate 300, and the pressing may be transmitted to the end-plate-side wall 101 (box inner wall) via the end plate 300 to damage the box inner wall. At this point, in the present application, since the buffering portion 303 capable of being deformed under pressure is provided in the spacing d between the first region 3011 of the end plate 300 and the end-plate-side wall 101 (box inner wall) of the box 100, the expansion space may be provided for the expansion of the battery unit 200 in the first direction X for buffering by deformation of the buffering portion 303, such that the end plate 300 may be protected from deformation or even failure caused by excessive pressing, and then, the box inner wall may be protected from damage caused by excessive pressing, thus facilitating normal assembly and use of the battery, and guaranteeing a service life of the battery.

In addition, when the battery unit 200 expands, usually, a central part has a large expansion amount, and a periphery has a small expansion amount, and therefore, usually, the expansion of the battery unit 200 greatly presses a central part of the end plate 300 and less presses a periphery of the end plate 300. That is, when the battery unit 200 expands, expansion distribution in a plane is not uniform, and expansion pressing applied to the entire end plate 300 is also unbalanced. At this point, if the imbalance of stress caused by the uneven expansion is not taken into consideration, the end plate and the box inner wall may be damaged even if the buffering portion is provided. In view of this, in the present application, the first surface 301 of the end plate 300 is provided with the first region 3011 corresponding to the central region of the first wall 2011 of the battery cell 201 and the second region 3012 corresponding to the edge region of the first wall 2011 of the battery cell 201, and the first region 3011 of the end plate 300 has a smaller thickness than the second region 3012; that is, the spacing d is provided between the first region 3011 of the end plate 300 and the end-plate-side wall 101 (box inner wall) of the box 100, and the buffering portion 303 is provided in the spacing d, such that a part of the end plate 300 provided with the buffering portion 303 may correspond to a central part of the battery unit 200 with a large expansion amount, and therefore, expansion pressing received by the end plate 300 may be balanced, unbalanced stress of the end plate 300 caused by uneven expansion of the battery unit 200 may be avoided, expansion pressing received by the whole end plate 300 may be kept balanced, buffering may be performed according to actual expansion distribution of the battery unit 200, the condition that local stress received by the end plate 300 is overlarge may be reduced, the end plate 300 may be better protected from deformation or even failure caused by excessive pressing, and then, the box inner wall may be protected from damage caused by excessive pressing, thus facilitating the normal assembly and use of the battery, and guaranteeing the service life of the battery.

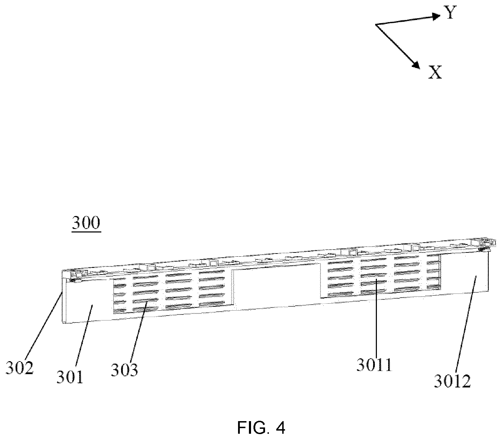

In addition, in the present application, the first surface 301 of the end plate 300 further has the second region 3012 corresponding to the edge region of the first wall 2011 of the battery cell 201, and the second region 3012 abuts against the end-plate-side wall 101 (box inner wall) of the box 100. Thus, when the battery unit 200 expands, since the second region 3012 of the first surface 301 of the end plate 300 directly abuts against the end-plate-side wall 101 (box inner wall) of the box 100, instead of being provided with a buffering portion 303 as the first region 3011, expansion of an end portion of the battery unit 200 may be restricted to guarantee reliability of electrical connection between the adjacent battery cells 201. In particular, as shown in FIGS. 4 and 5, the electrode terminals V are provided on the two second walls 2012 of the battery cell 201 provided oppositely in the second direction Y; that is, the electrode terminals V are provided at both ends of the battery cell 201 in the second direction Y, such that the expansion of the end portion of the battery unit 200 may be guaranteed by providing, on the end plate 300, the second region 3012 directly abutting against the end-plate-side wall 101 (box inner wall) of the box 100, thereby reliably guaranteeing the electrical connection of the battery cells.

In some embodiments, the edge region of the battery cell 201 accounts for 10% to 50% of the first wall 2011.

In some embodiments, the edge region of the battery cell 201 accounts for 20% to 40% of the first wall 2011.

As shown in FIG. 6, the edge regions of the first wall 2011 of the battery cell 201 refer to regions on the first wall 2011 having a certain length n from edges e of both sides of the first wall 2011 in the length direction. Thus, the first region 3011 and the second region 3012 of the first surface 301 of the end plate 300 are provided according to the above-mentioned proportion in the edge region of the battery cell 201, such that the uneven expansion of the battery unit 200 may be better handled, thereby better performing buffering according to the actual expansion distribution of the battery unit 200, and reducing the overlarge local stress.

In some embodiments, on the first wall 2011, a range of 0% to 25% from an edge e of the second wall 2012 in the second direction Y is the edge region.

In some embodiments, the edge regions in the present application are regions within a range of 0% to 25% of the length L of the battery cell 201 in the length direction (i.e., the second direction Y) of the battery cell 201 from the edges e of both sides of the first wall 2011 in the length direction. That is, the regions ranging from 0% to 25% of L (the length of the battery cell 201) from the edges e of both sides of the first wall 2011 in the length direction are the edge regions. In other words, the certain length n is 0% to 25% of the length L of the battery cell 201. As shown in FIG. 6, two edge regions of the first wall 2011 of the battery cell 201 are located on the two sides of the first wall 2011 in the second direction Y. Since the range of 0% to 25% on the first wall 2011 from the edge of the second wall 2012 in the second direction Y is the edge region, when the edge region is provided according to the above-mentioned proportion, the uneven expansion of the battery unit 200 may be better handled, thereby better performing buffering according to the actual expansion distribution of the battery unit 200, and reducing the overlarge local stress.

As shown in FIGS. 2 and 3, in some embodiments of the present application, at least a part of the buffering portion 303 extends in the second direction Y.

Since at least a part of the buffering portion 303 extends in the second direction Y, the stress of the end plate 300 may not be too concentrated, an expansion force of the battery unit 200 may be dispersed, the stress of the end plate 300 may be alleviated, and the buffering may be better provided for the expansion of the battery unit 200 That is, by extending at least a part of the buffering portion 303 in the second direction Y, the end plate 300 may be facilitated to disperse the expansion force caused by the expansion of the battery unit 200 in the length direction.

As shown in FIG. 7, in some embodiments of the present application, at least a part of the buffering portion 303 extends obliquely upward towards the box inner wall (end-plate-side wall 101). Thus, when the battery unit 200 expands to press the end plate 300, since the buffering portion 303 extends obliquely upward towards the box inner wall (end-plate-side wall 101) to have an inclination angle, the buffering portion 303 may be more easily deformed when the battery unit 200 expands to press and touch the box inner wall, so as to provide the expansion space for the expansion of the battery unit 200 in time to better facilitate buffering, and better disperse the expansion force caused by the expansion of the battery unit 200. The term "upward" in the term "extends obliquely upward" used herein is defined relative to a placement position of the bottom wall of the battery 10, and specifically, the term "upward" refers to a direction from the bottom wall of the box 100 of the battery 10 to the upper box (for example, the upper portions in FIGS. 2 and 7) when the battery 10 is placed on a battery carrying surface for carrying the battery, instead of a vertical direction in a physical sense. In addition, in the present application, the buffering portion 303 may be inclined upward at any angle as long as the buffering portion 303 may be deformed for buffering when the battery unit 200 expands, and the angle at which the buffering portion 303 is inclined upward is not particularly limited.

As shown in FIGS. 2 to 7, in some embodiments of the present application, the number of the buffering portions 303 is plural, and the plural buffering portions 303 are provided at intervals in a height direction of the end plate 300. Thus, the spaced arrangement of the plural buffering portions 303 in the height direction of the end plate 300 may better facilitate even dispersion of the expansion force of the battery unit 200, and improve stress uniformity of a contact surface of the end plate 300; as shown in FIGS. 2 to 7, in some embodiments of the present invention, the plurality of buffering portions 303 are arranged in a matrix. Thus, the expansion force of the battery unit 200 may be further evenly dispersed, and the stress uniformity of the contact surface of the end plate 300 may be improved to make the stress even, thereby better protecting the battery.

In some embodiments of the present application, the first region 3011 is formed by providing a recess in the end plate 300. Thus, a structure of the end plate is not required to be modified greatly, and the first region 3011 may be formed only by providing the end plate 300 with the recess; that is, the end plate 300 may have the first region 3011 and the second region 3012 thicker than the first region only by a simple process (for example, cutting, molding, or the like), thereby simplifying processing.

In some embodiments of the present application, the buffering portion 303 and the end plate 300 are of an integral structure. Due to the integral structure of the buffering portion 303 and the end plate 300, a buffering structure with the first region 3011 and the second region 3012 thicker than the first region may be implemented only by a simple process (molding, or the like), thereby simplifying processing.

In addition, the present application is not limited thereto, and the buffering portion 303 and the end plate 300 may be provided in a split structure as required. As a method of integrally forming the end plate 300 and the buffering portion 303, for example, injection molding, die casting, extrusion molding, or the like, may be used, but the present application is not limited thereto. The buffering portion 303 may be made of a same material as the end plate 300, for example, plastic or metal, or other materials, for example, an elastic material, as long as the buffering portion may abut against the end-plate-side wall 101 (box inner wall) to be deformed when the battery unit 200 expands, and provides the expansion space for the expansion of the battery unit 200 for buffering.

In some embodiments of the present application, as shown in FIGS. 2 to 7, the end-plate-side wall 101 (box inner wall) of the box 100 has a first clamping portion 102 protruding towards the end plate 300, the end plate 300 has a second clamping portion 304, and the first clamping portion 102 is configured to be snapped with the second clamping portion 304. Therefore, the end plate 300 and the box 100 may be positioned more precisely and more quickly to facilitate assembly of the end plate 300.

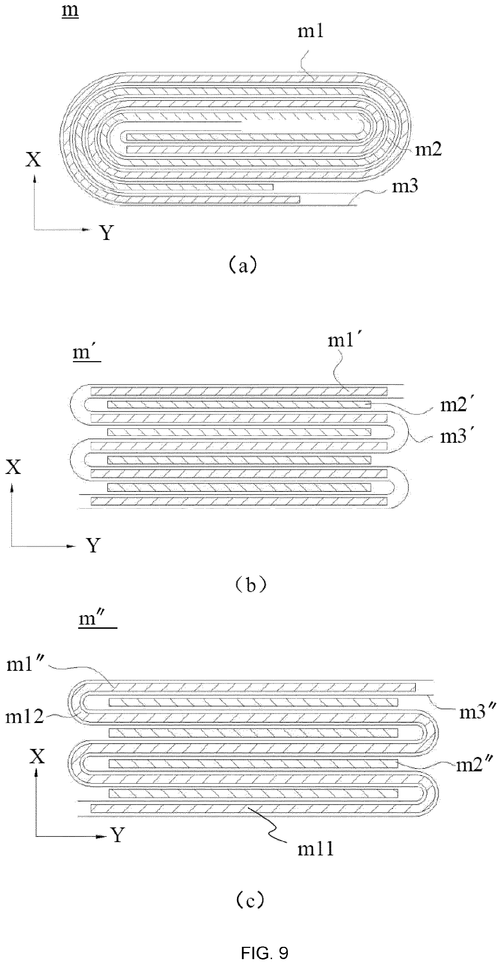

In some embodiments of the present application, as shown in (a) of FIG. 9, the battery cell 201 includes an electrode assembly m, the electrode assembly m includes a first electrode sheet m1, a second electrode sheet m2 and a separator m3, the first electrode sheet m1 and the second electrode sheet m2 have opposite polarity, and the separator m3 is configured to separate the first electrode sheet m1 from the second electrode sheet m2; the first electrode sheet m1 and the second electrode sheet m2 are wound around a winding axis to form a winding structure, and the winding axis is perpendicular to the first direction X; or as shown in (b) of FIG. 9, the electrode assembly m' includes a plurality of first electrode sheets m1', a plurality of second electrode sheets m2' and a separator m3', the plurality of first electrode sheets m1' and the plurality of second electrode sheets m2' are alternately stacked in the first direction X; or as shown in (c) of FIG. 9, the electrode assembly m" includes a first electrode sheet m1", a plurality of second electrode sheets m2" and a separator m3", the first electrode sheet m1" is continuously bent and includes a plurality of stacked sections m11 and a plurality of bent sections m12, the plurality of stacked sections m11 and the plurality of second electrode sheets m2" are alternately stacked in the first direction X, and each bent section m12 is configured to connect two adjacent stacked sections m11.

Thus, the battery cell mainly expands in the first direction, and the buffering portion is provided in the first direction and located between the battery unit and the box inner wall, thus better facilitating the buffering portion of the end plate to absorb the expansion of the battery unit.

In addition, in some embodiments of the present application, the first wall 2011 is a wall of the battery cell 201 with a largest area. Thus, the even dispersion of the expansion force of the battery unit may be better facilitated, and the stress uniformity of the contact surface of the end plate may be improved to make the stress even, thereby better protecting the battery.

Another embodiment of the present application provides an electric device, in which, for example, the above-mentioned battery 10 is used. The electric device may be, but is not limited to, a vehicle, a ship, an aircraft, or the like. It is to be understood that the battery according to the embodiment of the present application is applicable to various devices in which batteries are used, such as mobile phones, notebook computers, battery cars, electric vehicles, ships, spacecraft, electric toys, electric tools, or the like; for example, spacecraft include rockets, space shuttles, spaceships, or the like; electric toys include stationary or movable electric toys, for example, game machines, electric car toys, electric ship toys, electric airplane toys, or the like; electric tools include metal cutting electric tools, grinding electric tools, assembly electric tools, and electric tools for railways, for example, electric drills, electric grinders, electric wrenches, electric screwdrivers, electric hammers, concrete vibrators, and electric planers. The battery 10 according to the embodiment of the present application is not limited to application to the above-mentioned electric devices, but may be applied to all devices in which the batteries 10 are used.

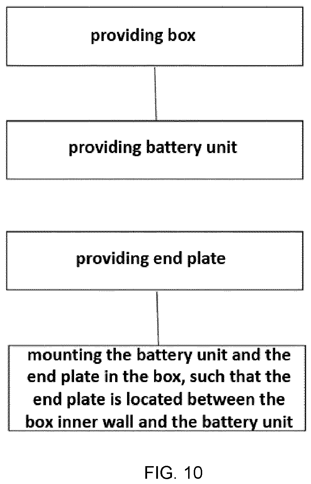

As shown in FIG. 10, another aspect of the present application provides a manufacturing method of a battery, for example, the above-mentioned battery 10, the method including the following steps S1 to S4:
S1: providing a box 100;
S2: providing a battery unit 200, the battery unit 200 including a plurality of battery cells 201 stacked in a first direction X, the battery cell 201 including two first walls 2011 provided oppositely in the first direction X and two second walls 2012 provided oppositely in a second direction Y, an electrode terminal V being provided on the second wall 2012, and the first direction X being orthogonal to the second direction Y;
S3: providing an end plate 300, the end plate 300 having a first surface 301 facing an end-plate-side wall 101 (box inner wall) of the box 200 and a second surface 302 facing the first wall 2011, the first surface 301 having a first region 3011 corresponding to a central region of the first wall 2011 and a second region 3012 corresponding to an edge region of the first wall 2011, and the second surface 302 being a flat surface; and
S4: mounting the battery unit 200 and the end plate 300 in the box 100, such that the end plate 300 is located between the end-plate-side wall 101 (box inner wall) and the battery unit 200, the second region 3012 abuts against the end-plate-side wall 101 (box inner wall), and spacing d exists between the first region 3011 and the end-plate-side wall 101 (box inner wall), a buffering portion 303 being arranged in the spacing d, and the buffering portion 303 being capable of abutting against the end-plate-side wall 101 (box inner wall) to be deformed when the battery unit 200 expands.

It is to be understood that the manufacturing method of a battery according to the present application is not limited to the above-mentioned order of steps S1, S2, S3, S4, for example, may have the order of steps S1, S3, S2, S4, the order of steps S2, S1, S3, S4, the order of steps S2, S3, S1, S4, the order of steps S3, S1, S2, S4, or the order of steps S3, S2, S1, S4.

Another aspect of the present application provides a manufacturing apparatus for manufacturing a battery, for example, the above-mentioned battery 10, including:
a first providing device configured to provide a box 100;
a second providing device configured to provide a battery unit 200, the battery unit 200 including a plurality of battery cells 201 stacked in a first direction X, the battery cell 201 including two first walls 2011 provided oppositely in the first direction X and two second walls 2012 provided oppositely in a second direction Y, an electrode terminal V being provided on the second wall 2012, and the first direction X being orthogonal to the second direction Y;
a third providing device configured to provide an end plate 300, the end plate 300 having a first surface 301 facing an end-plate-side wall 101 (box inner wall) of the box 200 and a second surface 302 facing the first wall 2011, the first surface 301 having a first region 3011 corresponding to a central region of the first wall 2011 and a second region 3012 corresponding to an edge region of the first wall 2011, and the second surface 302 being a flat surface; and
an assembling device configured to mount the battery unit 200 and the end plate 300 in the box 100, such that the end plate 300 is located between the end-plate-side wall 101 (box inner wall) and the battery unit 200, the second region 3012 abuts against the end-plate-side wall 101 (box inner wall), and spacing d exists between the first region 3011 and the end-plate-side wall 101 (box inner wall), a buffering portion 303 being arranged in the spacing d, and the buffering portion 303 being capable of abutting against the end-plate-side wall 101 (box inner wall) to be deformed when the battery unit 200 expands.

It should be noted that features in embodiments of the present application may be combined with each other without conflicts.

The above is only preferred embodiments of the present application and is not intended to limit the present application, and various modifications and changes may be made to the present application by those skilled in the art. The invention as claimed herein is defined by the appended claims.

## Claims

1. A battery comprising:
a box (100);
a battery unit (200), provided in the box (100), the battery unit (200) comprising a plurality of battery cells (201) stacked in a first direction (X), each of the battery cells (201) comprising two first walls (2011) provided oppositely in the first direction (X) and two second walls (2012) provided in a second direction (Y), an electrode terminal (V) being provided on a second wall (2012), and the first direction (X) being orthogonal to the second direction (Y); and
an end plate (300), provided between a box inner wall (101) of the box (100) and the battery unit (200), the end plate (300) having a first surface (301) facing the box inner wall (101) and a second surface (302) facing a first wall (2011), the first surface (301) having a first region (3011) corresponding to a central region of the first wall (2011) and a second region (3012) corresponding to an edge region of the first wall (2011), and the second surface (302) being a flat surface that is attached to the first wall (2011),
wherein spacing (d) exists between the first region (3011) and the box inner wall (101), a buffering portion (303) is provided in the spacing (d), the buffering portion (303) is configured to be capable of abutting against the box inner wall (101) to be deformed when the battery unit (200) expands, thereby providing an expansion space for the expansion of the battery unit (200) for buffering, and the second region (3012) abuts against the box inner wall (101),
wherein at least a part of the buffering portion (303) extends relative to the position of a bottom wall of the box (100) in a direction obliquely upward towards the box inner wall (101), wherein an upward direction refers to a direction from the bottom wall of the box (100) to an upper box
wherein the first region (3011) is formed by providing a recess in the end plate (300), and
wherein the buffering portion (303) and the end plate (300) are of an integral structure.

2. The battery according to claim 1,
wherein the edge region accounts for 10% to 50% of the first wall (2011).

3. The battery according to any one of claims 1 to 2,
wherein at least a part of the buffering portion (303) extends in the second direction (Y).

4. The battery according to any one of claims 1 to 3,
wherein plural buffering portions (303) are provided, and the plural buffering portions (303) are provided at intervals in a height direction of the end plate (300).

5. The battery according to claim 4,
wherein the plural buffering portions (303) are arranged in a matrix.

6. The battery according to any one of claims 1 to 5,
wherein the box inner wall (101) has a first clamping portion (102) protruding towards the end plate (300), the end plate has a second clamping portion (304), and the first clamping portion (102) is configured to be snapped with the second clamping portion (304).

7. The battery according to any one of claims 1 to 6, wherein
each of the battery cells (201) comprises an electrode assembly (m, m', m"), the electrode assembly (m, m', m") comprises a first electrode sheet (m1, m1', m1"), a second electrode sheet (m2, m2', m2") and a separator (m3, m3', m3"), the first electrode sheet (m1, m1', m1") and the second electrode sheet (m2, m2', m2") have opposite polarity, and the separator (m3, m3', m3") is configured to separate the first electrode sheet (m1, m1', m1") from the second electrode sheet (m2, m2', m2");
the first electrode sheet (m1) and the second electrode sheet (m2) are wound around a winding axis to form a winding structure, and the winding axis is perpendicular to the first direction (X); or
the electrode assembly (m, m', m") comprises a plurality of first electrode sheets (m1'), a plurality of second electrode sheets (m2') and a separator (m3'), the plurality of first electrode sheets (m1') and the plurality of second electrode sheets (m2') are alternately stacked in the first direction (X); or
the electrode assembly (m, m', m") comprises a first electrode sheet (m1"), a plurality of second electrode sheets (m2") and a separator (m3"), the first electrode sheet (m1") is continuously bent and comprises a plurality of stacked sections (m11) and a plurality of bent sections (m12), the plurality of stacked sections (m11) and the plurality of second electrode sheets (m2") are alternately stacked in the first direction (X), and each bent section (m12) is configured to connect two adjacent stacked sections (m11).

8. The battery according to any one of claims 1 to 7,
wherein the first wall (2011) is a wall of the battery cell (101) with a largest area.

9. An electric device, **characterized by** comprising the battery according to any one of claims 1 to 8.

10. A manufacturing method of a battery comprising:
providing a box (100);
providing a battery unit (200), the battery unit (200) comprising a plurality of battery cells (201) stacked in a first direction (X), each of the battery cells (201) comprising two first walls (2011) provided oppositely in the first direction (X) and two second walls (2012) provided oppositely in a second direction (Y), an electrode terminal (V) being provided on a second wall (2012), and the first direction (X) being orthogonal to the second direction (Y);
providing an end plate (300) and a buffering portion (303) of integral structure, the end plate (300) having a first surface (301) configured to face a box inner wall (101) and a second surface (302) configured to face a first wall (2011), the first surface (301) having a first region (3011) corresponding to a central region of the first wall (2011)
and a second region (3012) corresponding to an edge region of the first wall (2011), wherein the first region (3011) is formed by a recess formed in the end plate (300) and the second surface (3012) is a flat surface; and
mounting the battery unit (200) and the end plate (300) in the box, such that the end plate (300) is located between the box inner wall (101) and the battery unit (200), the second region (3012) abuts against the box inner wall (101), and spacing (d) exists between the first region (3011) and the box inner wall (101), wherein the buffering portion (303) is arranged in the spacing (d), wherein at least a part of the buffering portion (303) extends relative to the position of a bottom wall of the box (100) in a direction obliquely upward towards the box inner wall (101), wherein an upward direction refers to a direction from the bottom wall of the box 100 to an upper box,
and wherein the buffering portion (303) is capable of abutting against the box inner wall (101) to be deformed when the battery unit (200) expands.

11. A manufacturing apparatus of a battery comprising:
a first providing device, configured to provide a box (100);
a second providing device, configured to provide a battery unit (200), the battery unit (200) comprising a plurality of battery cells (201) stacked in a first direction (X), each of the battery cells (201) comprising two first walls (2011) provided oppositely in the first direction (X) and two second walls (2012) provided oppositely in a second direction (Y), an electrode terminal (V) being provided on the second wall (2012), and the first direction (X) being orthogonal to the second direction (Y);
a third providing device, configured to provide an end plate (300) and a buffering portion (303) of integral structure, the end plate (300) having a first surface (301) configured to face a box inner wall (101) and a second surface (302) configured to face a first wall (2011), the first surface (301) having a first region (3011) corresponding to a central region of the first wall (2011) and a second region (3012) corresponding to an edge region of the first wall (2011), wherein the first region (3011) is formed by a recess formed in the end plate (300) and the second surface (3012) is a flat surface; and
an assembling device, configured to mount the battery unit (200) and the end plate (300) in the box (100), such that the end plate (300) is located between the box inner wall (101) and the battery unit (200), the second region (2012) abuts against the box inner wall (101), and spacing (d) exists between the first region (3011) and the box inner wall (101), wherein the buffering portion (303) is arranged in the spacing (d), wherein at least a part of the buffering portion (303) extends relative to the position of a bottom wall of the box (100) in a direction obliquely upward towards the box inner wall (101), wherein an upward direction refers to a direction from the bottom wall of the box 100 to an upper box, and wherein the buffering portion (303) is capable of abutting against the box inner wall (101) to be deformed when the battery unit (200) expands.

## Patentansprüche

1. Eine Batterie, bestehend aus:
einer Schachtel (100);
einer Batterieeinheit (200), die in der Box (100) vorgesehen ist, wobei die Batterieeinheit (200) eine
Vielzahl von Batteriezellen (201) umfasst, die in einer ersten Richtung (X) gestapelt sind, wobei jede der Batteriezellen (201) zwei erste Wände (2011), die in der ersten Richtung (X) gegenüberliegend vorgesehen sind, und zwei zweite Wände (2012), die in einer zweiten Richtung (Y) vorgesehen sind, umfasst, wobei ein Elektrodenanschluss (V) an einer zweiten Wand (2012) vorgesehen ist und die erste Richtung (X) orthogonal zu der zweiten Richtung (Y) ist; und
eine Endplatte (300), die zwischen einer Innenwand (101) der Box (100) und der Batterieeinheit (200) vorgesehen ist, wobei die Endplatte (300) eine erste Oberfläche (301) aufweist, die der Boxinnenwand (101) zugewandt ist, und eine zweite Oberfläche (302), die einer ersten Wand (2011) zugewandt ist, wobei die erste Oberfläche (301) einen ersten Bereich (3011) aufweist, der einem zentralen Bereich der ersten Wand (2011) entspricht, und einen zweiten Bereich (3012) , der einem Randbereich der ersten Wand (2011) entspricht, und wobei die zweite Oberfläche (302) eine flache Oberfläche ist, die an der ersten Wand (2011) befestigt ist,
wobei zwischen dem ersten Bereich (3011) und der Boxinnenwand (101) ein Zwischenraum (d) besteht,
ein Pufferabschnitt (303) in dem Zwischenraum (d) vorgesehen ist, der Pufferabschnitt (303) so konfiguriert ist, dass er an der Boxinnenwand (101) anliegen kann, um sich zu verformen, wenn sich die Batterieeinheit (200) ausdehnt, wodurch ein Ausdehnungsraum für die Ausdehnung der Batterieeinheit (200) zum Puffern bereitgestellt wird, und der zweite Bereich (3012) an der Boxinnenwand (101) anliegt,
wobei sich mindestens ein Teil des Pufferabschnitts (303) relativ zur Position einer Bodenwand der Box (100) in einer Richtung schräg nach oben zur Boxinnenwand (101) erstreckt, wobei sich eine Richtung nach oben auf eine Richtung von der Bodenwand der Box (100) zu einer oberen Box bezieht,
wobei der erste Bereich (3011) durch Vorsehen einer Aussparung in der Endplatte (300) gebildet wird, und
wobei der Pufferabschnitt (303) und die Endplatte (300) eine integrale Struktur aufweisen.

2. Die Batterie nach Anspruch 1,
wobei der Randbereich 10 % bis 50 % der ersten Wand (2011) ausmacht.

3. Die Batterie nach einem der Ansprüche 1 bis 2,
wobei sich mindestens ein Teil des Pufferabschnitts (303) in die zweite Richtung (Y) erstreckt.

4. Die Batterie nach einem der Ansprüche 1 bis 3,
wobei mehrere Pufferabschnitte (303) vorgesehen sind und die mehreren Pufferab schnitte
(303) in Abständen in einer Höhenrichtung der Endplatte (300) vorgesehen sind.

5. Die Batterie nach Anspruch 4,
wobei die mehreren Pufferabschnitte (303) in einer Matrix angeordnet sind.

6. Die Batterie nach einem der Ansprüche 1 bis 5,
wobei die Boxinnenwand (101) einen ersten Klemmabschnitt (102) aufweist, der in Richtung der Endplatte (300) vorsteht, die Endplatte einen zweiten Klemmabschnitt (304) aufweist und der erste Klemmabschnitt (102) so konfiguriert ist, dass er mit dem zweiten Klemmabschnitt (304) einrastet.

7. Die Batterie nach einem der Ansprüche 1 bis 6, wobei
jede der Batteriezellen (201) eine Elektrodenanordnung (m, m', m") umfasst, die Elektrodenanordnung (m, m', m") umfasst eine erste Elektrodenplatte (m1, m1', m1"), eine zweite Elektrodenplatte (m2, m2', m2") und einen Separator (m3, m3', m3"), wobei die erste Elektrodenplatte (m1, m1', m1") und die zweite Elektrodenplatte (m2, m2', m2") entgegengesetzte Polarität aufweisen und der Separator (m3, m3', m3") so konfiguriert ist, dass er die erste Elektrodenplatte (m1, m1', m1") von der zweiten Elektrodenplatte (m2, m2', m2") trennt;
die erste Elektrodenplatte (m1) und die zweite Elektrodenplatte (m2) sind um eine Wickelachse gewickelt, um eine Wickelstruktur zu bilden, und die Wickelachse ist senkrecht zu der ersten Richtung (X); oder
die Elektrodenanordnung (m, m', m") umfasst eine Vielzahl von ersten Elektrodenplatten (m1'),
eine Vielzahl von zweiten Elektrodenplatten (m2') und einen Separator (m3'), wobei die Vielzahl von ersten Elektrodenplatten (m1') und die Vielzahl von zweiten Elektrodenplatten (m2') abwechselnd in der ersten Richtung (X) gestapelt sind; oder
die Elektrodenanordnung (m, m', m") umfasst eine erste Elektrodenplatte (m1"), eine Vielzahl
von zweiten Elektrodenplatten (m2") und einen Separator (m3"), die erste Elektrodenplatte (m1") ist kontinuierlich gebogen und umfasst eine Vielzahl von gestapelten Abschnitten (m11) und eine Vielzahl von gebogenen Abschnitten (m12), die Vielzahl von gestapelten Abschnitten (m11) und die Vielzahl von zweiten Elektrodenplatten (m2") sind abwechselnd in der ersten Richtung (X) gestapelt und jeder gebogene Abschnitt (m12) ist so konfiguriert, dass er zwei benachbarte gestapelte Abschnitte (m11) verbindet.

8. Die Batterie nach einem der Ansprüche 1 bis 7,
wobei die erste Wand (2011) eine Wand der Batteriezelle (101) mit der größten Fläche ist.

9. Elektrisches Gerät, **dadurch gekennzeichnet, dass** es die Batterie nach einem der Ansprüche 1 bis 8 umfasst.

10. Verfahren zur Herstellung einer Batterie, welches Folgendes
umfasst:
Bereitstellung einer Box (100);
Bereitstellen einer Batterieeinheit (200), wobei die Batterieeinheit (200) eine Vielzahl von Batteriezellen (201) umfasst, die in einer ersten Richtung (X) gestapelt sind, wobei jede der Batteriezellen (201) zwei erste Wände (2011), die gegenüberliegend in der ersten Richtung (X) vorgesehen sind, und zwei zweite Wände (2012), die gegenüberliegend in einer zweiten Richtung (Y) vorgesehen sind, umfasst, wobei ein Elektrodenanschluss (V) an einer zweiten Wand (2012) vorgesehen ist und die erste Richtung (X) orthogonal zu der zweiten Richtung (Y) ist;
Bereitstellen einer Endplatte (300) und eines Pufferabschnitts (303) mit integraler Struktur, wobei die
Endplatte (300) eine erste Oberfläche (301) aufweist, die so konfiguriert ist, dass sie einer Boxinnenwand (101) zugewandt ist, und eine zweite Oberfläche (302) aufweist, die so konfiguriert ist, dass sie einer ersten Wand (2011) zugewandt ist, wobei die erste Oberfläche (301) einen ersten Bereich (3011) aufweist, der einem zentralen Bereich der ersten Wand (2011) entspricht
und einen zweiten Bereich (3012), der einem Kantenbereich der ersten Wand (2011) entspricht, wobei der erste Bereich (3011) durch eine in der Endplatte (300) ausgebildete Aussparung gebildet wird und die zweite Oberfläche (3012) eine ebene Oberfläche ist; und
Anbringen der Batterieeinheit (200) und der Endplatte (300) in der Box, so dass sich die
Endplatte (300) zwischen der Boxinnenwand (101) und der Batterieeinheit (200) befindet, der zweite Bereich (3012) an der Boxinnenwand (101) anliegt und ein Zwischenraum (d) zwischen dem ersten Bereich (3011) und der Boxinnenwand (101) besteht, wobei der Pufferabschnitt (303) in dem Abstand (d) angeordnet ist, wobei sich zumindest ein Teil des Pufferabschnitts (303) relativ zu der Position einer Bodenwand der Box (100) in einer Richtung schräg nach oben zu der Boxinnenwand (101) erstreckt, wobei sich eine Richtung nach oben auf eine Richtung von der Bodenwand der Box (100) zu einer oberen Box bezieht,
und wobei der Pufferabschnitt (303) in der Lage ist, an der Boxinnenwand (101) anzuliegen, um verformt zu werden, wenn sich die Batterieeinheit (200) ausdehnt.

11. Eine Vorrichtung zur Herstellung einer Batterie, die Folgendes umfasst:
eine erste Bereitstellungsvorrichtung, die so konfiguriert ist, dass sie eine Box (100) bereitstellt;
eine zweite Bereitstellungsvorrichtung, die so konfiguriert ist, dass sie eine
Batterieeinheit (200) bereitstellt, wobei die Batterieeinheit (200) eine Vielzahl von Batteriezellen (201) umfasst, die in einer ersten Richtung (X) gestapelt sind, wobei jede der Batteriezellen (201) zwei erste Wände (2011), die gegenüberliegend in der ersten Richtung (X) vorgesehen sind, und zwei zweite Wände (2012), die gegenüberliegend in einer zweiten Richtung (Y) vorgesehen sind, umfasst, wobei ein Elektrodenanschluss (V) an der zweiten Wand (2012) vorgesehen ist und die erste Richtung (X) orthogonal zu der zweiten Richtung (Y) ist;
eine dritte Bereitstellungsvorrichtung, die so konfiguriert ist, dass sie eine Endplatte (300) und einen Pufferabschnitt (303)
mit integraler Struktur bereitstellt, wobei die Endplatte (300) eine erste Oberfläche (301), die so konfiguriert ist, dass sie einer Boxinnenwand (101) zugewandt ist, und eine zweite Oberfläche (302) aufweist, die so konfiguriert ist, dass sie einer ersten Wand (2011) zugewandt ist, wobei die erste Oberfläche (301) einen ersten Bereich (3011), der einem zentralen Bereich der ersten Wand (2011) entspricht, und einen zweiten Bereich (3012), der einem Randbereich der ersten Wand (2011) entspricht, aufweist, wobei der erste Bereich (3011) durch eine in der Endplatte (300) ausgebildete Aussparung gebildet wird und die zweite Oberfläche (3012) eine flache Oberfläche ist; und
eine Montagevorrichtung, die konfiguriert ist, um die Batterieeinheit (200) und die Endplatte (300)
in der Box (100) zu montieren, so dass sich die Endplatte (300) zwischen der Boxinnenwand (101) und der Batterieeinheit (200) befindet, der zweite Bereich (2012) an der Boxinnenwand (101) anliegt und ein Zwischenraum (d) zwischen dem ersten Bereich (3011) und der Boxinnenwand (101) besteht, wobei der Pufferabschnitt (303) in dem Zwischenraum (d) angeordnet ist, wobei zumindest ein Teil des Pufferabschnitts (303) sich relativ zu der Position einer Bodenwand der Box (100) in einer Richtung schräg nach oben in Richtung der Boxinnenwand (101) erstreckt, wobei sich eine Richtung nach oben auf eine Richtung von der Bodenwand der Box (100) zu einer oberen Box bezieht, und wobei der Pufferabschnitt (303) in der Lage ist, gegen die Boxinnenwand (101) zu stoßen, um verformt zu werden, wenn sich die Batterieeinheit (200) ausdehnt.

## Revendications

1. Une batterie comprenant :
un boîtier (100);
une unité de batterie (200), disposée dans le boîtier (100), l'unité de batterie (200) comprenant une pluralité de cellules de batterie (201) empilées dans une première direction (X), chacune des cellules de batterie (201) comprenant deux premières parois (2011) disposées de manière opposée dans la première direction (X) et deux deuxièmes parois (2012) disposées dans une deuxième direction (Y), une borne d'électrode (V) étant disposée sur une deuxième paroi (2012), et la première direction (X) étant orthogonale à la deuxième direction (Y); et
une plaque d'extrémité (300), disposée entre une paroi intérieure de boîtier (101) du boîtier (100) et l'unité de batterie (200), la plaque d'extrémité (300) comportant une première surface (301) faisant face à la paroi intérieure du boîtier (101) et une deuxième surface (302) faisant face à une première paroi (2011), la première surface (301) comportant une première région (3011) correspondant à une région centrale de la première paroi (2011) et une deuxième région (3012) correspondant à une région de bord de la première paroi (2011), et la deuxième surface (302) étant une surface plane qui est fixée à la première paroi (2011),
dans laquelle il existe un espacement (d) entre la première région (3011) et la paroi intérieure du boîtier (101), une portion tampon (303) est prévue dans l'espacement (d), la partie tampon (303) est configurée pour venir en butée contre la paroi intérieure du boîtier (101) pour être déformée lorsque l'unité de batterie (200) se dilate, fournissant ainsi un espace d'expansion pour l'expansion de l'unité de batterie (200) pour le tamponnage, et la deuxième région (3012) vient en butée contre la paroi intérieure du boîtier (101),
dans laquelle au moins une partie de la portion tampon (303) s'étend par rapport à la position d'une paroi inférieure du boîtier (100) dans une direction oblique vers le haut en direction de la paroi intérieure du boîtier (101), dans laquelle une direction vers le haut fait référence à une direction allant de la paroi inférieure du boîtier (100) à un boîtier supérieur
dans laquelle la première région (3011) est formée en fournissant un évidement dans la plaque d'extrémité (300), et
dans laquelle la portion tampon (303) et la plaque d'extrémité (300) sont solidaires entre elles.

2. La batterie selon la revendication 1,
dans laquelle la région de bord représente 10 % à 50 % de la première paroi (2011).

3. La batterie selon l'une quelconque des revendications 1 à 2,
dans laquelle au moins une partie de la portion tampon (303) s'étend dans la deuxième direction (Y).

4. La batterie selon l'une quelconque des revendications 1 à 3,
dans laquelle des portions tampon multiples (303) sont prévues, et les portions tampon multiples (303) sont disposées à des intervalles dans une direction de hauteur de la plaque d'extrémité (300).

5. La batterie selon la revendication 4,
dans laquelle des portions tampon multiples (303) sont disposées dans une matrice.

6. La batterie selon l'une quelconque des revendications 1 à 5,
dans laquelle la paroi intérieure du boîtier (101) comporte une première partie de serrage (102) faisant saillie vers la plaque d'extrémité (300), la plaque d'extrémité comporte une deuxième partie de serrage (304), et la première partie de serrage (102) est configurée pour être encliquetée avec la deuxième partie de serrage (304).

7. La batterie selon l'une quelconque des revendications 1 à 6, dans laquelle
chacune des cellules de batterie (201) comprend un ensemble d'électrodes (m, m', m"), l'ensemble d'électrodes (m, m', m"), comprend une première feuille d'électrode (m1, m1', m1"), une deuxième feuille d'électrode (m2, m2', m2"), et un séparateur (m3, m3', m3"), la première feuille d'électrode (m1, m1',m1"), et la deuxième feuille d'électrode (m2, m2', m2"), ont une polarité opposée, et le séparateur (m3, m3', m3"), est configuré pour séparer la première feuille d'électrode (m1, m1', m1"), de la deuxième feuille d'électrode (m2, m2', m2");
la première feuille d'électrode (m1) et la deuxième feuille d'électrode (m2) sont enroulées autour d'un axe d'enroulement pour former une structure d'enroulement, et l'axe d'enroulement est perpendiculaire à la première direction (X); ou
l'ensemble d'électrodes (m, m', m") comprend une pluralité de premières feuilles d'électrode (m1'), une pluralité de deuxièmes feuilles d'électrodes (m2') et un séparateur (m3'), la pluralité de premières feuilles d'électrodes (m1') et la pluralité de deuxièmes feuilles d'électrodes (m2') sont empilées alternativement dans la première direction (X); ou
l'ensemble électrode (m, m', m"), comprend une première feuille d'électrode (m1"), une pluralité de deuxièmes feuilles d'électrodes (m2") et un séparateur (m3"), la première feuille d'électrode (m1") est pliée en continu et comprend une pluralité de sections empilées (m11) et une pluralité de sections pliées (m12), la pluralité de sections empilées (m11) et la pluralité de deuxièmes feuilles d'électrodes (m2") sont empilées alternativement dans la première direction (X), et chaque section pliée (m12) est configurée pour relier deux sections empilées adjacentes (m11).

8. La batterie selon l'une quelconque des revendications 1 à 7,
dans laquelle la première paroi (2011) est une paroi de la cellule de batterie (101) ayant une plus grande surface.

9. Un dispositif électrique, **caractérisé en ce qu'**il comprend la batterie selon l'une quelconque des revendications 1 à 8.

10. Un procédé de fabrication d'une batterie comprenant:
fournir un boîtier (100);
fournir une unité de batterie (200), l'unité de batterie (200) comprenant une pluralité de cellules de batterie (201) empilées dans une première direction (X), chacune des cellules de batterie (201) comprenant deux premières parois (2011) disposées de manière opposée dans la première direction (X) et deux deuxièmes parois (2012) disposées de manière opposée dans une deuxième direction (Y), une borne d'électrode (V) étant disposée sur une deuxième paroi (2012), et la première direction (X) étant orthogonale à la deuxième direction (Y);
fournir une plaque d'extrémité (300) et une portion tampon (303) solidaires entre elles, la plaque d'extrémité (300) comportant une première surface (301) configurée pour faire face à une paroi intérieure du boîtier (101) et une deuxième surface (302) configurée pour faire face à une première paroi (2011), la première surface (301) comportant une première région (3011) correspondant à une région centrale de la première paroi (2011)
et une deuxième région (3012) correspondant à une région de bord de la première paroi (2011), dans laquelle la première région (3011) est formée par un évidement formé dans la plaque d'extrémité (300) et la deuxième surface (3012) est une surface plane; et
monter l'unité de batterie (200) et la plaque d'extrémité (300) dans le boîtier, de sorte que la plaque d'extrémité (300) soit située entre la paroi intérieure du boîtier (101) et l'unité de batterie (200), la deuxième région (3012) bute contre la paroi intérieure du boîtier (101), et un espacement (d) existe entre la première région (3011) et la paroi intérieure du boîtier (101), dans lequel la portion tampon (303) est disposée dans l'espacement (d), dans lequel au moins une partie de la portion tampon (303) s'étend par rapport à la position d'une paroi inférieure du boîtier (100) dans une direction oblique vers le haut en direction de la paroi intérieure du boîtier (101), dans lequel une direction vers le haut fait référence à une direction allant de la paroi inférieure du boîtier 100 à un boîtier supérieur,
et dans lequel la portion tampon (303) est capable de buter contre la paroi intérieure du boîtier (101) pour se être déformée lorsque l'unité de batterie (200) se dilate.

11. Un appareil de fabrication d'une batterie comprenant:
un premier dispositif de fourniture, configuré pour fournir un boîtier (100);
un deuxième dispositif de fourniture, configuré pour fournir une unité de batterie (200), l'unité de batterie (200) comprenant une pluralité de cellules de batterie (201) empilées dans une première direction (X), chacune des cellules de batterie (201) comprenant deux premières parois (2011) disposées de manière opposée dans la première direction (X) et deux deuxièmes parois (2012) disposées de manière opposée dans une deuxième direction (Y), une borne d'électrode (V) étant disposée sur la deuxième paroi (2012), et la première direction (X) étant orthogonale à la deuxième direction (Y);
un troisième dispositif de fourniture, configuré pour fournir une plaque d'extrémité (300) et une portion tampon (303) solidaires entre elles, la plaque d'extrémité (300) comportant une première surface (301) configurée pour faire face à une paroi intérieure du boîtier (101) et une deuxième surface (302) configurée pour faire face à une première paroi (2011), la première surface (301) comportant une première région (3011) correspondant à une région centrale de la première paroi (2011) et une deuxième région (3012) correspondant à une région de bord de la première paroi (2011), dans lequel la première région (3011) est formée par un évidement formé dans la plaque d'extrémité (300) et la deuxième surface (3012) est une surface plane; et
un dispositif d'assemblage, configuré pour monter l'unité de batterie (200) et la plaque d'extrémité (300) dans le boîtier (100), de telle sorte que la plaque d'extrémité (300) est située entre la paroi intérieure du boîtier (101) et l'unité de batterie (200), la deuxième région (2012) bute contre la paroi intérieure du boîtier (101), et un espacement (d) existe entre la première région (3011) et la paroi intérieure du boîtier (101), dans lequel la portion tampon (303) est disposée dans l'espacement (d), dans lequel au moins une partie de la portion tampon (303) s'étend par rapport à la position d'une paroi inférieure du boîtier (100) dans une direction oblique vers le haut en direction de la paroi intérieure du boîtier (101), dans lequel une direction vers le haut se réfère à une direction allant de la paroi inférieure du boîtier 100 à un boîtier supérieur, et dans lequel la portion tampon (303) est capable de buter contre la paroi intérieure du boîtier (101) pour être déformée lorsque l'unité de batterie (200) se dilate.
